# EUROPÄISCHE PATENTSCHRIFT

(11) **EP 3 589 920 B1**
(45) Veröffentlichungstag und Bekanntmachung des Hinweises auf die Patenterteilung: **01.03.2023**
(21) Anmeldenummer: 18707849.8
(22) Anmeldetag: 25.01.2018
(51) Int. Cl.: G01F 1/58, G01F 15/14, G01F 15/00

(54) **DURCHFLUSSMESSER UND FÜLLELEMENT UMFASSEND EINEN DURCHFLUSSMESSER**
FLOWMETER AND FILLING ELEMENT COMPRISING A FLOWMETER
DÉBITMÈTRE ET ÉLÉMENT DE REMPLISSAGE COMPRENANT UN DÉBITMÈTRE

(30) Priorität: 02.03.2017 DE 102017104388
(43) Veröffentlichungstag der Anmeldung: 08.01.2020
(73) Patentinhaber: KHS GmbH, 44143 Dortmund (DE)
(72) Erfinder: LORENZ, Jonathan, 55545 Bad Kreuznach (DE)
(86) Internationale Anmeldenummer: PCT/EP2018/051833
(87) Internationale Veröffentlichungsnummer: WO 2018/158010

(56) Entgegenhaltungen:
- EP-A1- 1 586 533
- DE-A1-102007 004 825
- DE-B3-102015 106 125
- US-A1- 2009 025 486
- US-A1- 2014 298 920

## Beschreibung

Die Erfindung bezieht sich auf einen magnetisch-induktiven Durchflussmesser (MID) sowie ein Füllelement umfassend einen Durchflussmesser.

Messsysteme zur Messung der Masse oder des Volumens eines in einen Behälter abgefüllten Füllguts sind bekannt (z.B. DE 10 2004 017 211 B3). Insbesondere sind magnetisch-induktive Durchflussmesser (MID) bekannt. Die in der Getränkeindustrie verwendeten MIDs weisen eine Bauweise derart auf, dass in einem Gehäuse ein Spulenkörper vorgesehen ist, der einen Fluidkanal umschließt und damit vom zu messenden Füllgut durchflossen wird. An diesem den Spulenkörper aufweisenden Gehäuse ist ein weiteres Gehäuse angeordnet bzw. angeflanscht, in dem ein mit dem Spulenkörper zusammenwirkendes Elektronikteil vorgesehen ist. Das Elektronikteil ist dabei beispielsweise zur Erfassung und Auswertung von durch den Spulenkörper bereitgestellten Messinformationen, beispielsweise durchflussmengenabhängigen Spannungs- oder Stromwerten ausgebildet.

Nachteilig an der bekannten Lösung ist, dass sich insbesondere auf horizontalen Flächen, insbesondere am Elektronikteil des MIDs, Verschmutzungen sammeln. Diese Verschmutzungen können in die geöffneten Flaschen fallen oder die Mündungsbereiche der Behälter verschmutzen, so dass die horizontalen Flächen der heutigen MIDs letztlich einen erhöhten Reinigungsaufwand bedingen.

Ein weiterer, wesentlicher Nachteil der bekannten MIDs besteht darin, dass neben dem, für das Füllgut vorgesehenen Fluidwegs, weitere Fluidwege oder Rohrleitungen, welche beispielsweise für Steuerluft, Rückgas, Vorspanngas oder ähnliches, nicht durch den Spulenkörper geführt werden können, da die Durchleitung von Fluiden durch diese Fluidwege oder Rohrleitungen die Messergebnisse zumindest verfälschen würden. Somit müssen Fluidwege und/oder Rohrleitungen mit erheblichem konstruktiven, mechanischem und auch finanziellem Aufwand am Spulenkörper des MIDs vorbeigeführt werden.

Ein weiterer Durchflussmesser wurde durch die US 2009/0025486 A1 vorgestellt. Bei diesem Durchflussmesser wurden alle, für die Funktion des Durchflussmessers erforderlichen Komponenten unmittelbar und so eng wie möglich um die einzige vorhandene, für das zu messende Fluid vorgesehene Rohrleitung angeordnet. Weiterhin sieht diese Schrift vor, dass sowohl diese eine Rohrleitung und auch die benötigten Komponenten von einem gemeinsamen Gehäuse umgeben werden, so dass die Rohrleitung und der Durchflussmesser eine kompakte und in sich geschlossene Einheit bilden, wobei die geschlossene Einheit als solche stets als eigenständiges Bauteil in eine Rohrleitung eingefügt werden muss.

Ein weiterer Durchflussmesser wurde durch die US 2014/0298920 A1 vorgestellt. Der von dieser Schrift vorgestellte Durchflussmesser weist ebenfalls genau eine Rohrleitung auf, welche für das zu messende Medium vorgesehen ist. In weiterer Übereinstimmung mit der US 2009/0025486 A1 weist der vorgestellte Durchflussmesser auch ein kompaktes Gehäuse auf, welches sowohl die eine Rohrleitung, als auch die weitern Komponenten umschließt. Zusätzlich weist der von der US 2014/0298920 A1 vorgestellte Durchflussmesser ein Display und eine nach außen geführte Anschlussbuchse auf. Trotz dieser Abänderungen, muss auch dieser Durchflussmesser stets als eigenständiges Bauteil in eine Rohrleitung eingefügt werden.

Ein weiterer, diesem Stand der Technik im Wesentlichen entsprechender Durchflussmesser wurde durch die DE 10 2007 004 825 A1 vorgestellt.

Ausgehend hiervon ist es Aufgabe der Erfindung, einen magnetisch-induktiven Durchflussmesser anzugeben, der hinsichtlich der Reinigbarkeit und Integrierbarkeit in ein Füllsystem verbessert ist.

Die Aufgabe wird durch einen Durchflussmesser gemäß den Merkmalen des unabhängigen Patentanspruchs 1 gelöst. Ein Füllelement mit einem derartigen Durchflussmesser ist Gegenstand des nebengeordneten Patentanspruchs 11.

Gemäß einem ersten Aspekt bezieht sich die Erfindung auf einen magnetisch-induktiven Durchflussmesser umfassend einen Spulenkörper, der zur Erfassung eines Fluidstroms in einem Fluidkanal ausgebildet ist, und eine Elektronikeinheit, die mit dem Spulenkörper elektrisch verbunden ist und zur Erfassung und/oder Auswertung von durch den Spulenkörper bereitgestellten elektrischen Signalen ausgebildet ist. Dabei sind der Spulenkörper und die Elektronikeinheit in einem gemeinsamen Gehäuse vorgesehen.

Der wesentliche Vorteil des magnetisch-induktiven Durchflussmessers besteht darin, dass durch die Integration der Elektronikeinheit in das den Spulenkörper aufweisende Gehäuse Flächen und schwer zu reinigende Winkel bzw. Ecken, an denen sich Verschmutzungen ablagern können, reduziert werden, so dass sich eine verbesserte Reinigbarkeit des Durchflussmessers bzw. der Gesamtvorrichtung, an der der Durchflussmesser vorgesehen ist, ergibt. Zudem ergibt sich durch die Integration der Elektronikeinheit in das den Spulenkörper aufweisende Gehäuse eine kompakte Bauform, was die Verlegung der Fluidwege und/oder Rohrleitungen erleichtert.

Erfindungsgemäß ist das Gehäuse als ein den Fluidkanal umgebendes Gehäuse ausgebildet, wobei die Elektronikeinheit innerhalb eines Gehäuseabschnitts vorgesehen ist, der den Fluidkanal umfangsseitig umschließt. In anderen Worten ist das die Elektronikeinheit umschließende Gehäuse nicht als separater Gehäuseabschnitt seitlich an dem den Spulenkörper bzw. den Fluidkanal aufweisenden Gehäuse angeordnet bzw. angeflanscht, sondern sowohl der Spulenkörper als auch die Elektronikeinheit sind in einem gemeinsamen Gehäuse vorgesehen, wobei dieses gemeinsame Gehäuse den Fluidkanal aufweist bzw. ausbildet und den Spulenkörper sowie die Elektronikeinheit einhaust. Dadurch wird ein winkeliger, aus mehreren Gehäuseabschnitten bestehender Aufbau des Durchflussmessers wirksam vermieden.

Erfindungsgemäß ist in dem Gehäuse zumindest ein weiterer Fluidkanal zur Durchleitung von Gasen oder Flüssigkeiten vorgesehen. Dieser weitere Fluidkanal kann zumindest abschnittsweise parallel oder im Wesentlichen parallel zu dem den Spulenkörper durchdringenden Fluidkanal verlaufen. Vorzugsweise verläuft dieser weitere Fluidkanal außerhalb des Spulenkörpers. Dadurch ist es möglich, für einen Füllvorgang nötige Fluide bzw. Gase, beispielsweise ein Spanngas, ein Spülgas, ein Entlastungsgas etc. durch den Durchflussmesser zu leiten, und zwar derart, dass außenseitig an dem Durchflussmesser vorbei keine Leitungen verlegt werden müssen, was hinsichtlich Reinigbarkeit und Verlegungsaufwand vorteilhaft ist.

Gemäß einem Ausführungsbeispiel ist im Gehäuse eine Gassperre vorgesehen oder das Gehäuse weist einen Bauraum oder eine Ausnehmung auf, in den/die eine Gassperre integrierbar ist. Derartige Gassperren weisen eine Vielzahl von Fluiddurchlässen mit einem kleinen Querschnitt auf, beispielsweise gebildet durch eine gitter- oder wabenartige Struktur, um zum einen bereits zu Beginn des Füllvorgangs einen laminaren Fluidstrom am Auslass bereitzustellen, und um zum anderen bedingt durch die Kapillarkräfte ein unerwünschtes Nachtopfen oder Nachlaufen am Ende des Füllvorgangs zu vermeiden. Dies ist insbesondere dann vorteilhaft, wenn der Durchflussmesser im Bereich des Auslasses eines Füllelements angeordnet ist und/oder diesen Ausgang bildet.

Gemäß einem Ausführungsbeispiel sind in dem Gehäuse Durchführungen für Elektronikleitungen vorgesehen. Diese Durchführungen verlaufen insbesondere außenseitig an dem Spulenkörper und beabstandet zu diesem vorbei. Alternativ verlaufen die Durchführungen zumindest abschnittsweise quer zu dem im Gehäuse vorgesehenen Fluidkanal. Durch diese Durchführungen hindurch lassen sich innerhalb des Gehäuses Elektronikleitungen verlegen, so dass diese vorteilhaft in das Gehäuse integrierbar sind und nicht außenseitig verlegt werden müssen. Die Elektronikleitungen können beispielsweise zur Verbindung zwischen der Elektronikeinheit und einer übergeordneten Verarbeitungseinheit dienen.

Gemäß einem Ausführungsbeispiel ist am oder im Gehäuse zumindest ein Fluidstromschaltventil und/oder Fluidstromregelventil vorgesehen. Dieses Fluidstromschaltventil kann mit einem im Gehäuse angeordneten weiteren Fluidkanal zusammenwirken, um ein gesteuertes Durchströmen des weiteren Fluidkanals zu erreichen. Das Fluidstromschaltventil bzw. Fluidstromregelventil kann zum einen außenseitig am Gehäuse angeflanscht sein. Alternativ kann das Fluidstromschaltventil bzw. Fluidstromregelventil in das Gehäuse integriert sein, so dass dieses außenseitig gegenüber dem Gehäuse nicht vorsteht.

Gemäß einem Ausführungsbeispiel sind drahtlose Übertragungsmittel zur Übertragung von durch die Elektronikeinheit bereitgestellten Informationen vorgesehen. Die drahtlosen Übertragungsmittel können beispielsweise zum Austausch von Informationen mit einer übergeordneten Verarbeitungseinheit vorgesehen sein. Es können dabei jedwede drahtlose Kommunikationsstandards verwendet werden, beispielsweise WIFI, Bluetooth, drahtlose optische Übertragungsverfahren (z.B. Infrarot) etc. Dadurch kann der Verkabelungsaufwand an der Gesamtmaschine (z.B. der Füllmaschine) erheblich reduziert werden.

Gemäß einem Ausführungsbeispiel bildet das Gehäuse zumindest abschnittsweise einen Gehäuseabschnitt eines Füllelements. In anderen Worten bildet damit der Durchflussmesser einen integralen Bestandteil des Füllelements, und zwar derart, dass ein Abschnitt des Füllelementgehäuses durch das Gehäuse des Durchflussmessers ersetzt ist. Beispielsweise kann der Durchflussmesser zwischen einem oberen und einem unteren Füllelementgehäuseabschnitt vorgesehen sein oder aber einen unteren Abschnitt des Füllelementgehäuses ausbilden.

Gemäß einem Ausführungsbeispiel ist das Gehäuse in Querschnittsform und Querschnittsgröße an den Querschnitt eines über und/oder unter dem Gehäuse liegenden Gehäuseabschnitt des Füllelements angepasst. Insbesondere weist das Gehäuse eine identische oder im Wesentlichen identische Querschnittsform und Querschnittsgröße wie ein über und/oder unter dem Gehäuse liegender Gehäuseabschnitt des Füllelements auf. Dadurch kann eine optimierte Integration des Durchflussmessers in das Füllelement erreicht werden, und zwar ohne oder im Wesentlichen ohne Ausbildung von horizontalen Flächenabschnitten, an denen sich Verschmutzungen ablagern können.

Gemäß einem Ausführungsbeispiel weist das Gehäuse zur Vermeidung von horizontalen Gehäuseaußenflächen, abgesehen von den Anschlussflanschen, abgeschrägte oder gerundete Gehäuseaußenflächen auf. Dadurch kann der Durchflussmesser in hinsichtlich der Reinigbarkeit optimierter Weise in eine Fluidleitung eingebracht werden.

Gemäß einem Ausführungsbeispiel ist im Gehäuse ein Drucksensor vorgesehen und/oder die Elektronikeinheit ist zur Erfassung und/oder Auswertung eines von einem Drucksensor bereitgestellten Messsignals ausgebildet. Dadurch kann durch den Durchflussmesser ein im Fluidkanal anliegender Druck gemessen bzw. ausgewertet werden, so dass basierend darauf eine Steuerung des Füllprozesses erfolgen kann.

Gemäß einem Ausführungsbeispiel verläuft durch den vom Spulenkörper zumindest abschnittsweise umschlossenen Fluidkanal ein Abschnitt eines Ventilkörpers oder ein den Ventilkörper aufweisendes Ventilelement, beispielsweise ein Ventilstößel. Damit wird in dem Fluidkanal ein ringförmiger Fluidstrom gebildet, der für die induktive Durchflussmessung vorteilhaft ist.

Gemäß einem weiteren Aspekt betrifft die Erfindung ein Füllelement zur gesteuerten Abgabe eines flüssigen Füllguts an einem Füllgutauslauf. Am Füllelement ist dabei ein Durchflussmesser gemäß eines der vorhergehenden Ausführungsbeispiele vorgesehen.

Gemäß einem Ausführungsbeispiel des Füllelements weist der Durchflussmesser zumindest eine Sensoreinheit, insbesondere einen Drucksensor zur Erfassung einer Messgröße auf. Mittels des Drucksensors lässt sich der Füllgutdruck im Fluidkanal des Füllelements bestimmen und abhängig davon der Füllprozess steuern. Dadurch wird eine vorteilhafte Integration des Drucksensors bei verringertem Verkabelungsaufwand erreicht.

Gemäß einem Ausführungsbeispiel des Füllelements ist die Elektronikeinheit des Durchflussmessers zur Erfassung und/oder Auswertung eines von einer Sensoreinheit des Füllelements, insbesondere eines von einer Sensoreinheit des Durchflussmessers bereitgestellten Messsignals ausgebildet ist. Die Sensoreinheit kann beispielsweise der vorbeschriebene Drucksensor sein. Dadurch kann vorteilhafterweise durch die Elektronikeinheit neben der Erfassung und/oder Auswertung von durch den Spulenkörper bereitgestellten Informationen auch eine Erfassung und/oder Auswertung der von der Sensoreinheit, insbesondere des Drucksensors bereitgestellten Informationen erfolgen.

Gemäß einem Ausführungsbeispiel weist der Durchflussmesser zumindest das Gehäuse des Durchflussmessers mindestens ein Element zur Abschirmung magnetischer Einflüsse auf den Spulenkörper auf. Mit dieser magnetischen Abschirmung sollen beispielsweise magnetische Einflüsse, die durch die weiteren Fluidleitungen oder die elektrischen Leitungen, oder die Elektronikeinheit emittiert werden von dem Spulenkörper ferngehalten werden, um die Messergebnisse nicht zu verfälschen. Das Element zur Abschirmung magnetischer Einflüsse kann beispielsweise aus MU-Metall bestehen, und als Blech oder beschichtete Folie ausgeführt sein.

Des Weiteren kann sich die Erfindung auf eine Füllmaschine zur Befüllung von Behältern mit einem fließfähigen Füllgut beziehen, an der Durchflussmesser gemäß den zuvor beschriebenen Ausführungsbeispielen Verwendung finden. Der Durchflussmesser kann dabei entweder im Bereich der Füllelemente der Füllmaschine vorgesehen sein oder in einem Bereich einer Fluidleitung, die ein Füllelement mit einem Füllgutvorratsraum, insbesondere einem Füllguttank verbindet.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft und grob schematisch ein erstes Ausführungsbeispiel, das nicht Teil der vorliegenden Erfindung ist, eines Durchflussmessers mit in einem Gehäuse integrierter Elektronikeinheit in einer perspektivischen Ansicht;
- Fig. 2: beispielhaft und grob schematisch ein zweites Ausführungsbeispiel, das Teil der vorliegenden Erfindung ist, eines Durchflussmessers mit in einem Gehäuse integrierter Elektronikeinheit in einer perspektivischen Ansicht;
- Fig. 3: beispielhaft und grob schematisch ein drittes Ausführungsbeispiel, das nicht Teil der vorliegenden Erfindung ist, eines Durchflussmessers mit in einem Gehäuse integrierter Elektronikeinheit und integriert in eine Fluidleitung in einer seitlichen Ansicht;
- Fig. 4: beispielhaft und schematisch ein erstes Ausführungsbeispiel, das nicht Teil der vorliegenden Erfindung ist, eines Füllelements mit einem Durchflussmesser mit in einem Gehäuse integrierter Elektronikeinheit;
- Fig. 5: beispielhaft und schematisch ein zweites Ausführungsbeispiel, das nicht Teil der vorliegenden Erfindung ist, eines Füllelements mit einem Durchflussmesser mit in einem Gehäuse integrierter Elektronikeinheit;
- Fig. 6: beispielhaft und schematisch ein drittes Ausführungsbeispiel, das nicht Teil der vorliegenden Erfindung ist, eines Füllelements mit einem Durchflussmesser mit in einem Gehäuse integrierter Elektronikeinheit und einer Kabeldurchführung; und
- Fig. 7: beispielhaft und schematisch ein viertes Ausführungsbeispiel, das Teil der vorliegenden Erfindung ist, eines Füllelements mit einem Durchflussmesser mit in einem Gehäuse integrierter Elektronikeinheit und einem weiteren Fluidkanal.

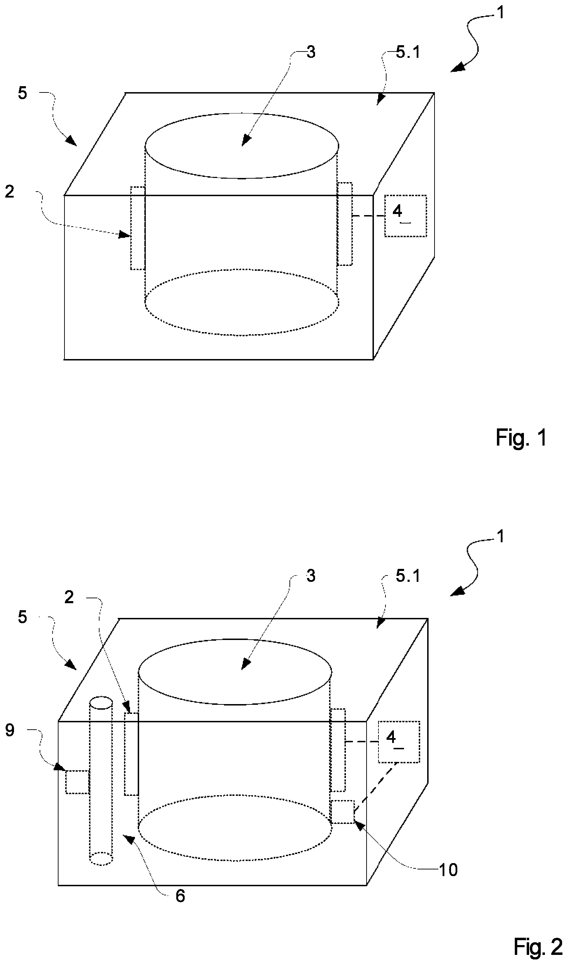

In Figur 1 ist beispielhaft und schematisch ein magnetisch-induktiver Durchflussmesser (MID) 1 gezeigt. Der MID 1 umfasst ein Gehäuse 5, in dem im gezeigten Ausführungsbeispiel sämtliche Funktionselemente des Durchflussmessers angeordnet sind. In dem Gehäuse 5 ist ein Fluidkanal 3 ausgebildet, durch den ein flüssiges Füllgut geleitet wird, um mittels des MID 1 den Volumenstrom des durchfließenden Füllgutes bestimmen zu können. Zur Bestimmung der Durchflussmenge ist ein Spulenkörper 2 vorgesehen, der den Fluidkanal 3 umfangsseitig umschließt. Durch den Spulenkörper 2 kann durch eine induktive Messmethode der Volumenstrom des durch den Kanal 3 durchgeleiteten Füllgutes bestimmt werden. Zur Erfassung und/oder Auswertung des durch den Spulenkörper 2 bereitgestellten elektrischen Signals, das insbesondere abhängig von dem im Kanal 3 fließenden Volumenstrom des Füllgutes ist und damit ein Maß für die Durchflussmenge bildet, ist eine Elektronikeinheit 4 vorgesehen. Diese Elektronikeinheit 4 ist elektrisch mit dem Spulenkörper 2 verbunden. Die Elektronikeinheit 4 kann beispielsweise vom Spulenkörper 2 empfangene elektrische Messinformationen (z.B. Strom- und/oder Spannungswerte) erfassen, für die Weiterverarbeitung aufbereiten und/oder eine zumindest teilweise Weiterverarbeitung (z.B. eine Digitalisierung) der Messinformationen vornehmen.

Wie in Figur 1 ersichtlich, ist die Elektronikeinheit 4 in das Gehäuse 5 integriert. In anderen Worten ist an das Gehäuse 5 nicht die Elektronikeinheit 4 mit einem getrennten Gehäuse angeordnet sondern ein gemeinsames Gehäuse 5 umschließt den Spulenkörper 2 und gleichzeitig auch die Elektronikeinheit 4. Dadurch werden entscheidende Vorteile hinsichtlich der Erfüllung von hygienischen Anforderungen und einer verbesserten optischen Integration des Durchflussmessers 1 in ein Füllsystem, insbesondere eine Füllanlage zum Abfüllen von Getränken erreicht.

An dem Gehäuse 5 kann eine elektrische Schnittstelle, beispielsweise eine Steckerbuchse vorgesehen sein, über welche von der Elektronikeinheit 4 bereitgestellte Informationen an eine übergeordnete Verarbeitungseinheit, beispielsweise einen Steuerrechner zur Steuerung der Füllanlage übermittelt werden. Alternativ kann der Durchflussmesser 1 Mittel zur drahtlosen Übertragung der von der Elektronikeinheit 4 bereitgestellten Informationen aufweisen, so dass diese Informationen drahtlos an eine übergeordnete Verarbeitungseinheit übertragen werden können. Die drahtlosen Übertragungsmittel können einen Kommunikationstandard wie beispielsweise WIFI-, Buetooth-, etc. implementieren.

Der Durchflussmesser gemäß Figur 1 lässt sich in einen Fluidkanal (in Figur 1 nicht gezeigt) integrieren, beispielsweise durch Verbinden der oberseitig bzw. unterseitig vorgesehenen Gehäuseflächen 5.1. Dort können beispielsweise Fluidleitungsabschnitte oder aber auch Abschnitte eines Füllelementgehäuses angeflanscht werden.

Das Gehäuse 5 kann beispielsweise blockartig ausgebildet sein. Insbesondere kann der Gehäuseblock aus einem Vollmaterial hergestellt sein. Der Spulenkörper 2, der Fluidkanal 3 und die Elektronikeinheit 4 können durch Bohrungen hergestellt (z.B. im Falle des Fluidkanals) bzw. in Ausnehmungen des Gehäuseblocks eingebracht sein. An zumindest einer Gehäusefläche 5.1 kann eine Dichtung vorgesehen sein, um das Gehäuse 5 fluiddicht mit einem Fluidleitungsabschnitt bzw. Füllelementgehäuse zu verbinden.

Der Durchflussmesser 1 bildet damit eine Messzelle, die sämtliche für die Messung (insbesondere den Spulenkörper 2), Erfassung und ggf. Auswertung (insbesondere die Elektronikeinheit 4) der Durchflussmenge erforderlichen Funktionselemente enthält.

Figur 2 zeigt ein weiteres Ausführungsbeispiel des Durchflussmessers 1, das ähnlich zu dem vorbeschriebenen Ausführungsbeispiel gemäß Figur 1 aufgebaut ist. Nachfolgend werden lediglich die Unterschiede zu dem zuvor beschriebenen Ausführungsbeispiel erläutert. Im Übrigen gelten die vorherigen Ausführungen auch für das Ausführungsbeispiel gemäß Figur 2.

Unterschiedlich zum Ausführungsbeispiel gemäß Figur 1 ist in dem Gehäuse 5 neben dem Fluidkanal 3 ein weiterer Fluidkanal 6 vorgesehen. Dieser weitere Fluidkanal 6 kann zur Durchleitung von Gasen und oder Flüssigkeiten vorgesehen sein. Dieser weitere Fluidkanal 6 kann beispielsweise einen Kanal zur Bereitstellung eines Vakuums in einem Füllprozess, einen Kanal zur Bereitstellung eines Vorspanngases zum Vorspannen eines Behälters vor dem Füllprozess, einen Kanal zur Abführung eines Rückgases eines Füllprozesses, einen Kanal zur Bereitstellung eines Spülgases und/oder einen Kanal, über den ein Gas zur Entlastung eines zu befüllenden Behälters abgeführt wird, bilden. Dadurch kann nicht nur das hinsichtlich der Füllmenge zu messende Füllgut durch das Gehäuse 5 geleitet werden, sondern auch andere Gase oder Flüssigkeiten, die bei einem Füllprozess auftreten bzw. verwendet werden. Dadurch werden der Leitungsaufwand und der Aufwand zur Verlegung derartiger Leitungen entscheidend reduziert. Zudem wird eine Füllanlage durch die Integration des zumindest einen weiteren Fluidkanals 6 in das Gehäuse 5 hinsichtlich ihrer Reinigbarkeit entscheidend verbessert.

An oder in dem Gehäuse 5 kann ein Anschlussbereich für ein Fluidstromschaltventil und/oder ein Fluidstromregelventil 9 vorgesehen sein, um den Fluidstrom eines durch den weiteren Fluidkanal 6 fließenden Fluids schalten bzw. steuern zu können. Ein Fluidstromschaltventil bzw. ein Fluidstromregelventil 9 kann beispielsweise außenseitig an dem Gehäuse 5 angeflanscht werden, um den Fluidstrom im weiteren Fluidkanal 6 zu steuern. Alternativ kann das Fluidstromschaltventil bzw. das Fluidstromregelventil 9 in das Gehäuse 5 integriert sein. Dadurch kann der Durchflussmesser 1 hinsichtlich Kompaktheit und leichterer Reinigbarkeit weiter verbessert werden.

Des Weiteren kann in dem Gehäuse 5 eine Sensoreinheit vorgesehen sein. Diese Sensoreinheit kann beispielsweise ein Drucksensor 10 sein. Die Sensoreinheit kann mit dem im Fluidkanal 3 geführten Fluid in Wirkverbindung stehen, um Messinformationen zu gewinnen. Beispielsweise kann im Falle eines Drucksensors 10 dieser Drucksensor den Druck des Füllgutes erfassen, um beispielsweise basierend darauf den Füllprozess geeignet zu steuern. Die Erfassung und/oder Auswertung der von der Sensoreinheit bereitgestellten Messinformationen kann mittels der Elektronikeinheit 4 erfolgen. Diese Erfassung und/oder Auswertung durch die Elektronikeinheit 4 kann auch dann erfolgen, wenn die Sensoreinheit, insbesondere der Drucksensor 10 kein integraler Bestandteil des Durchflussmessers 1 ist, sondern beispielsweise als getrennter Sensor an einem Füllelement vorgesehen ist.

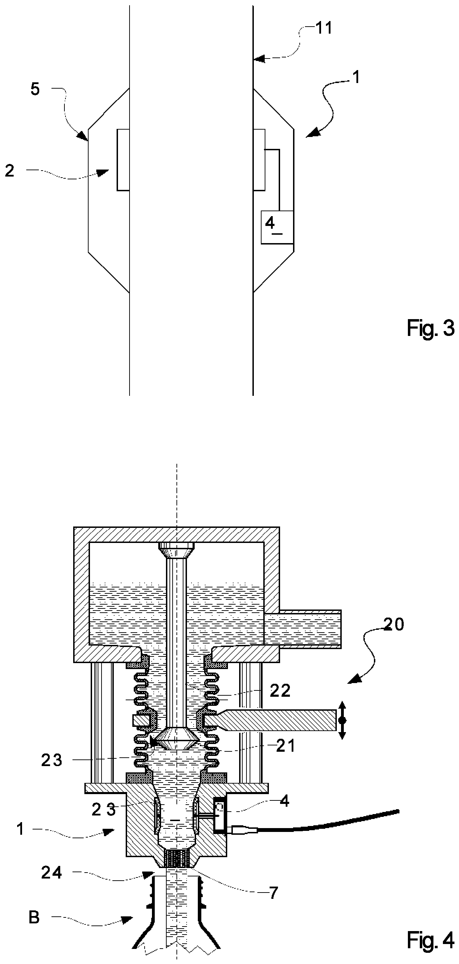

Figur 3 zeigt ein weiteres Ausführungsbeispiel eines Durchflussmessers 1 in einer seitlichen Schnittdarstellung. Der Durchflussmesser 1 ist hierbei in eine Fluidleitung 11 integriert, die beispielsweise einen Vorratsraum für ein Füllgut, beispielsweise einen Füllguttank mit einem Füllelement verbindet. Der Durchflussmesser 1 ist mit seinem Gehäuse 5 in die Fluidleitung 11 integriert, und zwar vorzugsweise derart, dass der im Gehäuse 5 ausgebildete Fluidkanal 3 in Größe und Querschnitt an den durch die Fluidleitung 11 gebildeten Fluidkanal angepasst ist. Insbesondere gleichen die Größe und der Querschnitt des Fluidkanals 3 dem Fluidkanal der Fluidleitung 11. Dadurch kann das Fluid störungsfrei oder im Wesentlichen störungsfrei den Durchflussmesser 1 durchfließen. Durch das Gehäuse 5, das wie vorher beschrieben den Spulenkörper 2 und die Elektronikeinheit 4 aufweist, kann der Fluidstrom durch die Fluidleitung 11 gemessen werden. Durch die Integration der Elektronikeinheit 4 in das Gehäuse 5, das gleichzeitig den Fluidkanal 3 umfangsseitig umgibt, wird eine optimierte Integration und eine verbesserte Reinigbarkeit erreicht.

Wie im Ausführungsbeispiel gemäß Figur 3 gezeigt, verdickt das Gehäuse 5 die Fluidleitung 11 im Bereich des Durchflussmessers 1. Um Ablagerungen bzw. Verunreinigungen an horizontalen Flächen des Gehäuses 5 zu vermeiden, können die umfangsseitig über die Fluidleitung 11 abstehenden Gehäuseflächen 5.1 abgeschrägt oder abgerundet ausgebildet sein. Alternativ ist es möglich, dass das Gehäuse 5 insgesamt, abgesehen von den Anschlussflächen für die Fluidleitung 11, kugelförmig oder eiförmig ausgebildet ist.

Figuren 4 bis 7 zeigen die Integration eines Durchflussmessers 1 gemäß einem der vorher beschriebenen Ausführungsbeispiele in ein Füllelement 20. Das Füllelement 20 kann insbesondere zur Abfüllung eines flüssigen Füllgutes in einen Behälter B ausgebildet sein. Das Füllelement 20 weist einen Ventilkörper 21 auf, der an einem beispielsweise Stößel artig ausgebildeten Ventilelement 22 vorgesehen ist. Der Ventilkörper 21 wirkt mit einem Ventilsitz 23 zusammen, um abhängig von der Relativposition des Ventilkörpers 21 zum Ventilsitz 23 ein Öffnen bzw. Schließen des im Füllelement 20 ausgebildeten Füllventils zu bewirken. Dadurch kann eine gesteuerte Befüllung des an einem Auslass 24 des Füllelements 20 angeordneten Behälters B erfolgen. Das Füllelement 20 weist zudem ein Füllelementgehäuse 25 auf, in dem ein Kanal 25.1 für das Füllgut ausgebildet ist.

Zur Messung des Füllgut-Volumenstroms durch das Füllelement 20 weist dieses Füllelement 20 einen MID 1 auf. In dem in Figur 4 gezeigten Ausführungsbeispiel ist der Durchflussmesser 1 mit seinem Gehäuse 5, das, wie zuvor beschrieben den Spulenkörper 2 und die Elektronikeinheit 4 aufweist, in einem Bereich zwischen dem Ventilkörper 21 und dem Auslass 24 angeordnet. Dabei bildet der Fluidkanal 3 des Durchflussmessers 1 einen Teil des Kanals 25.1 durch das Füllelement 20. Des Weiteren bildet vorteilhafter Weise das Gehäuse 5 des Durchflussmessers 1 einen Gehäuseabschnitt des Füllelements 20.

Im gezeigten Ausführungsbeispiel ist an dem Gehäuse 5 des Durchflussmessers 1 der Auslass 24 vorgesehen. Zum Verhindern von Nachtropfen am Ende des Füllvorgangs und zur Bildung eines Füllgutstrahls mit laminarer Strömung kann in oder an dem Gehäuse 5 eine Gassperre 7 vorgesehen sein. Diese Gassperre 7 kann eine Vielzahl von kleinflächigen Füllgutdurchlässen, beispielsweise gebildet durch eine Gitter- oder Kanalstruktur, aufweisen. Diese kleinflächigen Füllgutdurchlässe Formen den Füllgutstrahl in gewünschter Weise und verhindern durch Kapillarwirkung ein unerwünschtes Nachtropfen.

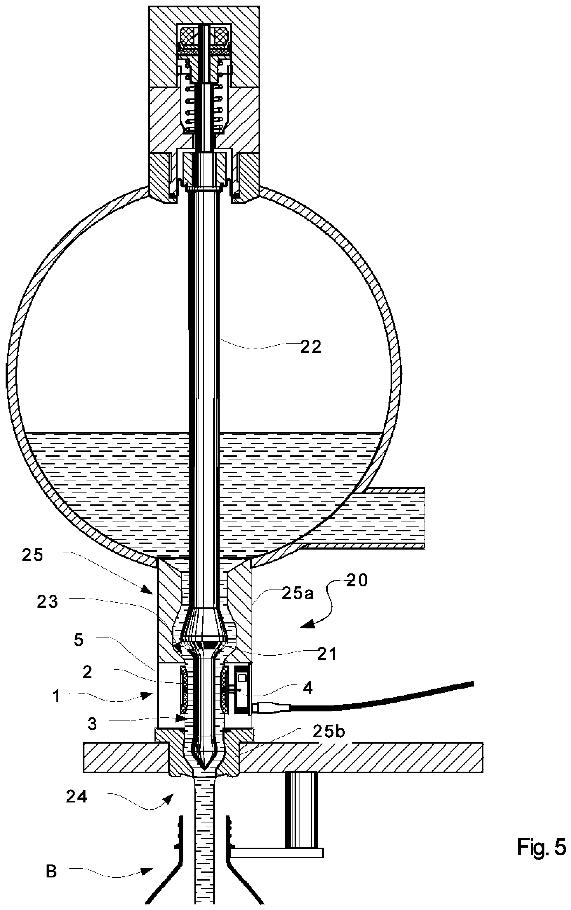

In dem Ausführungsbeispiel gemäß Figur 5 ist der Durchflussmesser 1 in einem Mittenbereich des Füllelementgehäuses 25 vorgesehen. In anderen Worten ist das Gehäuse 5 des Durchflussmessers 1 zwischen einem oberen Füllelementgehäuseabschnitt 25a und einem unteren Füllelementgehäuseabschnitt 25b angeordnet. Die Größe und Querschnittsform des Gehäuses 5 ist vorzugsweise derart gewählt, dass die umfangsseitigen Außenflächen des Gehäuses 5 und der Füllelementgehäuseabschnitte 25a, 25b fluchten. In anderen Worten bilden sich damit kantenfreie oder im wesentlichen Kanten freie Übergänge zwischen den Füllelementgehäuseabschnitten 25a, 25b und dem Gehäuse 5. Durch die Integration der Elektronikeinheit 4 in das Gehäuse 5 ergibt sich auch kein radialer Überstand der Elektronikeinheit 4 gegenüber den Füllelementgehäuseabschnitten 25a, 25b, so dass insgesamt eine baulich verbesserte Integration des Durchflussmessers 1 in das Füllelement 20 erreicht wird.

Wie in Figur 5 ersichtlich, erstreckt sich ein Ventilelement 22, an dem der Ventilkörper 21 ausgebildet ist, zumindest abschnittsweise durch den Fluidkanal 3 des Durchflussmessers 1. Dadurch bildet sich im Bereich des Durchflussmessers 1 ein ringförmiger Fluidkanal 3 aus.

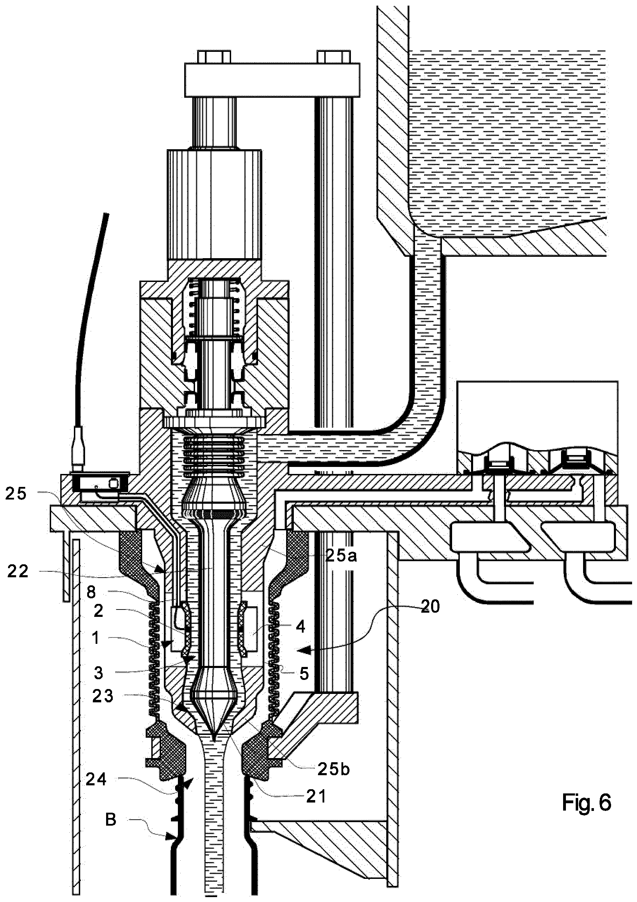

In dem Ausführungsbeispiel gemäß Figur 6 ist das Gehäuse 5 des Durchflussmessers 1 wiederum zwischen einem oberen und einem unteren Füllelementgehäuseabschnitt 25a, 25b eingebracht. Das Gehäuse 5, in dem neben dem Spulenkörper 2 wiederum zumindest ein Teil einer Elektronikeinheit 4 vorgesehen ist, weist zudem eine Durchführung 8 für eine elektrische Leitung auf. Diese Durchführung 8 kann beispielsweise durch eine Bohrung im Gehäuse 5 gebildet werden. Dadurch lässt sich beispielsweise die Elektronikeinheit 4 mit einer außenliegenden weiteren Elektronikeinheit bzw. einer Anschlussstelle elektrisch verbinden.

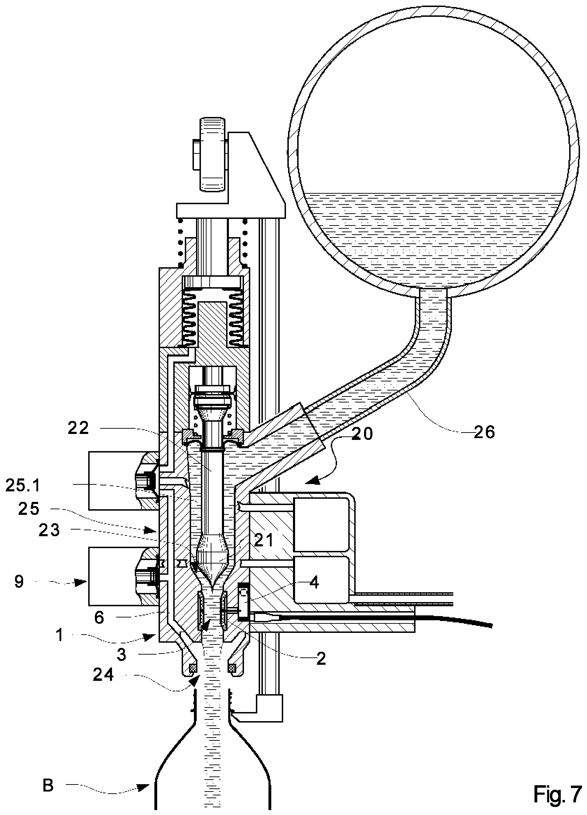

In Figur 7 ist ein weiteres Ausführungsbeispiel eines erfindungsgemäßen, in ein Füllelement 20 integrierten Durchflussmessers 1 gezeigt. Das Gehäuse 5 des Durchflussmessers 1 bildet wiederum einen Abschnitt des Füllelementgehäuses 25. Zur Durchleitung eines weiteren Fluids (z.B. Spanngas etc.) durch das Gehäuse 5 ist in diesem Gehäuse 5 ein weiterer Fluidkanal 6 vorgesehen, der beispielsweise seitlich neben dem Fluidkanal 3 das Gehäuse 5 durchzieht. Zur Steuerung des Fluidflusses durch den weiteren Fluidkanal 6 kann ein Fluidstromschaltventil bzw. ein Fluidstromregelventil 9 vorgesehen sein. Dieses Fluidstromschaltventil bzw. ein Fluidstromregelventil 9 kann, wie im Ausführungsbeispiel gemäß Figur 7 gezeigt, außenseitig an dem Gehäuse 5 des Durchflussmessers 1 angeordnet sein. Alternativ kann dieses Fluidstromschaltventil bzw. ein Fluidstromregelventil 9 in das Gehäuse 5 integriert sein, so dass dieses nicht seitlich gegenüber der Gehäuseaußenfläche übersteht. Dadurch wird eine weiterhin vorteilhafte Reinigbarkeit des Füllelements 20 erreicht. Zudem kann dadurch verhindert werden, dass Fluidleitungen nicht umständlich um den Durchflussmesser 1 herum verlegt werden müssen.

Gemäß einem weiteren Ausführungsbeispiel kann der Durchflussmesser 1 alternativ auch in einem Bereich einer Fluidzuführleitung 26 (Figur 7), d.h. zwischen einem Füllguttank und dem vertikal oder im Wesentlichen vertikal verlaufenden Kanal 25.1 im Füllelement 20 vorgesehen sein. Hierbei kann eine in Figur 3 gezeigte bzw. im Zusammenhang mit Figur 3 vorher beschriebene Ausführungsvariante des Durchflussmessers 1 Verwendung finden.

Die Erfindung wurde durch den unabhängigen Anspruch 1 und die abhängigen Ansprüche 2-13 spezifiziert.

### Bezugszeichenliste

- 1: Durchflussmesser
- 2: Spulenkörper
- 3: Fluidkanal
- 4: Elektronikeinheit
- 5: Gehäuse
- 5.1: Gehäusefläche
- 6: weiterer Fluidkanal
- 7: Gassperre
- 8: Durchführung
- 9: Fluidstromschaltventil/Fluidstromrgelventil
- 10: Drucksensor
- 11: Fluidleitung

- 20: Füllelement
- 21: Ventilkörper
- 22: Ventilelement
- 23: Ventilsitz
- 24: Auslass
- 25: Füllelementgehäuse
- 25a: oberer Füllelementgehäuseabschnitt
- 25b: unterer Füllelementgehäuseabschnitt
- 25.1: Kanal
- 26: Fluidzuführleitung

- B: Behälter

## Patentansprüche

1. Magnetisch-induktiver Durchflussmesser umfassend einen Spulenkörper (2), der zur Erfassung eines Fluidstroms in einem Fluidkanal (3) ausgebildet ist, und eine Elektronikeinheit (4), die mit dem Spulenkörper (2) elektrisch verbunden ist und zur Erfassung und/oder Auswertung von durch den Spulenkörper (2) bereitgestellten elektrischen Signalen ausgebildet ist, **wobei** der Spulenkörper (2) und die Elektronikeinheit (4) in einem gemeinsamen Gehäuse (5) vorgesehen sind, **und wobei** das Gehäuse (5) als ein den Fluidkanal (3) umgebendes Gehäuse ausgebildet ist, wobei die Elektronikeinheit (4) innerhalb eines Gehäuseabschnitts vorgesehen ist, der den Fluidkanal umfangsseitig umschließt, **dadurch gekennzeichnet, dass** in dem Gehäuse (5) zumindest ein weiterer Fluidkanal (6) zur Durchleitung von Gasen oder Flüssigkeiten vorgesehen ist.

2. Durchflussmesser nach Anspruch 1, **dadurch gekennzeichnet, dass** im Gehäuse (5) eine Gassperre (7) vorgesehen ist oder einen Bauraum aufweist, in den eine Gassperre (7) integrierbar ist.

3. Durchflussmesser nach **Anspruch 1 oder 2, dadurch gekennzeichnet, dass** in dem Gehäuse (5) mindestens eine Durchführung (8) für mindestens eine Elektronikleitung vorgesehen ist.

4. Durchflussmesser nach einem der vorhergehenden Ansprüche, **dadurch gekennzeichnet, dass** am oder im Gehäuse (5) zumindest ein Fluidstromschaltventil und/oder Fluidstromregelventil (9) vorgesehen ist.

5. Durchflussmesser nach einem der vorhergehenden Ansprüche, **dadurch gekennzeichnet, dass** drahtlose Übertragungsmittel zur Übertragung von durch die Elektronikeinheit (4) bereitgestellten Informationen vorgesehen sind.

6. Durchflussmesser nach einem der vorhergehenden Ansprüche, **dadurch gekennzeichnet, dass** das Gehäuse (5) zumindest abschnittsweise einen Gehäuseabschnitt eines Füllelements (20) bildet.

7. Durchflussmesser nach Anspruch 6, **dadurch gekennzeichnet, dass** das Gehäuse (5) in Querschnittsform und Querschnittsgröße an den Querschnitt eines über und/oder unter dem Gehäuse (5) liegenden Gehäuseabschnitt des Füllelements (20) angepasst ist, insbesondere dass das Gehäuse (5) eine identische oder im Wesentlichen identische Querschnittsform und Querschnittsgröße wie ein über und/oder unter dem Gehäuse (5) liegender Gehäuseabschnitt des Füllelements (20) aufweist.

8. Durchflussmesser nach einem der vorhergehenden Ansprüche, **dadurch gekennzeichnet, dass** das Gehäuse (5) zur Vermeidung von horizontalen Gehäuseaußenflächen, abgesehen von den Anschlussflanschen, abgeschrägte oder gerundete Gehäuseaußenflächen aufweist.

9. Durchflussmesser nach einem der vorhergehenden Ansprüche, **dadurch gekennzeichnet, dass** im Gehäuse (5) ein Drucksensor (10) vorgesehen ist und/oder die Elektronikeinheit (4) zur Erfassung und/oder Auswertung eines von einem Drucksensor (10) bereitgestellten Messsignals ausgebildet ist.

10. Durchflussmesser nach einem der vorhergehenden Ansprüche, **dadurch gekennzeichnet, dass** durch den vom Spulenkörper (2) zumindest abschnittsweise umschlossenen Fluidkanal (3) ein Abschnitt eines Ventilkörpers (21) oder ein den Ventilkörper (21) aufweisendes Ventilelement (22) verläuft.

11. Füllelement zur gesteuerten Abgabe eines flüssigen Füllguts an einem Füllgutauslauf, **dadurch gekennzeichnet, dass** am Füllelement (20) ein Durchflussmesser (1) gemäß eines der vorhergehenden Patentansprüche vorgesehen ist.

12. Füllelement nach Anspruch 11, **dadurch gekennzeichnet, dass** der Durchflussmesser (1) zumindest eine Sensoreinheit, insbesondere einen Drucksensor (10) zur Erfassung einer Messgröße aufweist.

13. Füllelement nach Anspruch 11 oder 12, **dadurch gekennzeichnet, dass** die Elektronikeinheit (4) des Durchflussmessers (1) zur Erfassung und/oder Auswertung eines von einer Sensoreinheit des Füllelements (20), insbesondere eines von einer Sensoreinheit des Durchflussmessers (1) bereitgestellten Messsignals ausgebildet ist.

## Claims

1. Magnetic-inductive flowmeter, comprising a coil body (2), which is designed to sense a fluid flow in a fluid channel (3), and an electronic unit (4), which is electrically connected to the coil body (2) and is designed to sense and/or evaluate electrical signals provided by the coil body (2), **wherein** the coil body (2) and the electronic unit (4) are provided in a common housing (5), **and wherein** the housing (5) is designed as a housing surrounding the fluid channel (3), wherein the electronic unit (4) is provided inside a housing section which surrounds the fluid channel on the periphery, **characterised in that** at least one further fluid channel (6) is provided in the housing (5) in order to convey gases or fluids.

2. Flowmeter according to claim 1, **characterised in that** a gas block (7) is provided in the housing (5) or a structural space is provided in which a gas block (7) can be integrated.

3. Flowmeter according to claim 1 or 2, **characterised in that** at least one through-passage (8) for at least one electronics line is provided in the housing (5).

4. Flowmeter according to any one of the preceding claims, **characterised in that** at least one fluid flow switching valve and/or fluid flow regulating valve (9) is provided on or in the housing (5).

5. Flowmeter according to any one of the preceding claims, **characterised in that** wireless transmission means are provided for transmitting information provided by the electronic unit (4).

6. Flowmeter according to any one of the preceding claims, **characterised in that** the housing (5) at least partially forms a housing section of a filling element (20).

7. Flowmeter according to claim 6, **characterised in that** the housing (5) is adapted in cross-sectional shape and cross-sectional size to the crosssection of a housing section of the filling element (20) located above and/or below the housing (5), in particular that the housing (5) has an identical or essentially identical cross-sectional shape and cross-sectional size to a housing section of the filling element (20) located above and/or below the housing (5).

8. Flowmeter according to any one of the preceding claims, **characterised in that**, apart from connection flanges, the housing (5) has oblique or rounded housing outer surfaces in order to avoid horizontal housing outer surfaces.

9. Flowmeter according to any one of the preceding claims, **characterised in that** a pressure sensor (10) is provided in the housing (5) and/or the electronic unit (4) is designed to sense and/or evaluate a measured signal provided by a pressure sensor (10).

10. Flowmeter according to any one of the preceding claims, **characterised in that** a section of a valve body (21), or a valve element (22) comprising the valve body (21), runs through the fluid channel (3) which is at least in sections enclosed by the coil body (2).

11. Filling element for the controlled emission of a fluid filling material at a filling material outlet, **characterised in that** the filling element (20) is provided with a flowmeter (1) according to any one of the preceding claims is provided.

12. Filling element according to claim 11, **characterised in that** the flowmeter (1) comprises at least one sensor unit, in particular a pressure sensor (10) for detecting a measured size.

13. Filling element according to claim 11 or 12, **characterised in that** the electronic unit (4) of the flowmeter (1) is designed to sense and/or evaluate a measurement signal provided by a sensor unit of the filling element (20), in particular a measurement signal provided by a sensor unit of the flowmeter (1).

## Revendications

1. Débitmètre magnéto-inductif comprenant un corps de bobine (2) qui est réalisé pour la détection d'un courant de fluide dans un canal de fluide (3), et une unité électronique (4) qui est électriquement reliée au corps de bobine (2) et est réalisée pour la détection et/ou l'évaluation de signaux électriques fournis par le corps de bobine (2), **dans lequel** le corps de bobine (2) et l'unité électronique (4) sont prévus dans un boîtier (5) commun, **et dans lequel** le boîtier (5) est réalisé en tant qu'un boîtier entourant le canal de fluide (3), dans lequel l'unité électronique (4) est prévue à l'intérieur d'une section de boîtier qui entoure côté périphérie le canal de fluide, **caractérisé en ce qu'**au moins un autre canal de fluide (6) est prévu dans le boîtier (5) pour le passage de gaz ou de liquides.

2. Débitmètre selon la revendication 1, **caractérisé en ce qu'**une barrière aux gaz (7) est prévue dans le boîtier (5) ou présente un espace de construction, dans lequel une barrière aux gaz (7) peut être intégrée.

3. Débitmètre selon la **revendication 1 ou 2, caractérisé en ce qu'**au moins un passage (8) pour au moins une ligne électronique est prévu dans le boîtier (5).

4. Débitmètre selon l'une quelconque des revendications précédentes, **caractérisé en ce qu'**au moins une soupape de commutation de courant de fluide et/ou une soupape de régulation de courant de fluide (9) est prévue au niveau du boîtier (5) ou dans celui-ci.

5. Débitmètre selon l'une quelconque des revendications précédentes, **caractérisé en ce que** des moyens de transmission sans fil sont prévus pour la transmission d'informations fournies par l'unité électronique (4).

6. Débitmètre selon l'une quelconque des revendications précédentes, **caractérisé en ce que** le boîtier (5) forme au moins par sections une section de boîtier d'un élément de remplissage (20).

7. Débitmètre selon la revendication 6, **caractérisé en ce que** le boîtier (5) est adapté en forme et grandeur de section transversale à la section transversale d'une section de boîtier se situant au-dessus et/ou en dessous du boîtier (5) de l'élément de remplissage (20), en particulier que le boîtier (5) présente une forme et grandeur de section transversale identiques ou sensiblement identiques à celles d'une section de boîtier se situant au-dessus et/ou en dessous du boîtier (5) de l'élément de remplissage (20).

8. Débitmètre selon l'une quelconque des revendications précédentes, **caractérisé en ce que** le boîtier (5) présente des surfaces extérieures de boîtier biseautées ou arrondies pour éviter des surfaces extérieures de boîtier horizontales, à l'exception des brides de raccordement.

9. Débitmètre selon l'une quelconque des revendications précédentes, **caractérisé en ce qu'**un capteur de pression (10) est prévu dans le boîtier (5) et/ou l'unité électronique (4) est réalisée pour la détection et/ou l'évaluation d'un signal de mesure fourni par un capteur de pression (10).

10. Débitmètre selon l'une quelconque des revendications précédentes, **caractérisé en ce qu'**une section d'un corps de soupape (21) ou un élément de soupape (22) présentant le corps de soupape (21) s'étend à travers le canal de fluide (3) entouré au moins par section par le corps de bobine (2).

11. Elément de remplissage pour la distribution commandée d'un produit de remplissage liquide au niveau d'une sortie de produit de remplissage, **caractérisé en ce qu'**un débitmètre (1) selon l'une quelconque des revendications précédentes est prévu au niveau de l'élément de remplissage (20).

12. Elément de remplissage selon la revendication 11, **caractérisé en ce que** le débitmètre (1) présente au moins une unité de capteur, en particulier un capteur de pression (10) pour la détection d'une grandeur de mesure.

13. Elément de remplissage selon la revendication 11 ou 12, **caractérisé en ce que** l'unité électronique (4) du débitmètre (1) est réalisée pour la détection et/ou l'évaluation d'un signal de mesure fourni par une unité de capteur de l'élément de remplissage (20), en particulier d'un signal de mesure fourni par une unité de capteur du débitmètre (1).
